# EUROPEAN PATENT SPECIFICATION

(11) **EP 3 990 958 B1**
(45) Date of publication and mention of the grant of the patent: **02.12.2026**
(21) Application number: 20736282.3
(22) Date of filing: 26.06.2020
(51) Int. Cl.: G02B 7/00

(54) **DEFORMABLE DEVICE FOR POSITIONING A HOLDER**
VERFORMBARE VORRICHTUNG ZUR POSITIONIERUNG EINES HALTERS
DISPOSITIF DÉFORMABLE POUR LE POSITIONNEMENT D'UN SUPPORT

(30) Priority: 26.06.2019 EP 19305859
(43) Date of publication of application: 04.05.2022
(73) Proprietor: Paris Sciences et Lettres, 75006 Paris (FR); CENTRE NATIONAL DE LA RECHERCHE SCIENTIFIQUE (CNRS), 75016 Paris (FR); SORBONNE UNIVERSITE, 75006 Paris (FR); Université Paris Cité, 75006 Paris (FR)
(72) Inventor: RADOU, Gaël, 95800 Cergy-le-Haut (FR); VIEILLE, Thibault, 78150 Rocquencourt (FR); CROQUETTE, Vincent, 92160 Antony (FR)
(74) Representative: Regimbeau
(86) International application number: PCT/EP2020/068132
(87) International publication number: WO 2020/260655

(56) References cited:
- EP-A1- 3 428 708
- DE-A1- 4 041 870
- US-A1- 2007 195 435

## Description

### TECHNICAL FIELD

The present invention relates to a device for positioning an object. This device finds particular application for actuating with precision the focusing position of a microscope objective.

### BACKGROUND OF THE INVENTION

In order to study interactions between DNA molecules and other components, such as proteins, it is known to submit the DNA molecules to stretching forces and to measure the elastic properties (*i.e.* relative extension versus force characteristics) of the molecules.

Document EP 3181703 A1 discloses for instance an optical device for measuring the position of an object along a given direction, comprising an optical imaging system. In this device, a transmission mask allows selecting two radiation parts from light radiations diffused by the object to be measured so as to generate two spots in the image recorded by the detector. As the distance between the two spots along a second direction, transverse to the given direction, is proportional to the distance between the bead and the object plane of the imaging system, it is possible to infer, from the image, the position of the bead according to the given direction.

In such an optical device, the optical imaging system comprises a microscope objective. The microscope objective is supported by a holder. The position of the holder in the given direction is actuated by a piezoelectric device. The piezoelectric device has the advantage to actuate the holder with a fast response time after receiving a control voltage.

However, the price of such a piezoelectric device is extremely high.

In addition, the piezoelectric device needs a continuous control of an applied voltage to maintain its position. The associated voltage feedback can introduce a mechanical noise, hindering the measurement of the position of the bead in the given direction. It is known to reduce this mechanical noise with the help of an expensive high quality electronic feedback, but this noise cannot be entirely eliminated.

Document DE 40 41 870 A1 describes an adjusting device for an optical component comprising a base, a carrier plate for the optical component, three spring elements running parallel to one another and arranged between the base and the carrier plate and five adjusting elements acting on the carrier plate so as to deflect the carrier in the base in at least five degrees of freedom. Document US 2007/195435 A1 describes a method for adjusting an optical system, the method comprising: placing the optical system in a controlled environment enclosure; producing non-ambient conditions within the enclosure; and adjusting an optical mount of the optical system while the optical system is in the non-ambient conditions within the enclosure. Document EP 3 428 708 A1 describes a device for moving an optical element along an optical axis of a microscope with a parallelogram guide unit as a parallel crank mechanism for the optical element.

### SUMMARY OF THE INVENTION

A device has been developed to respond to the above-mentioned issues of the prior art. The device, adapted for positioning an object according to a direction, comprises:
- a frame,
- a holder for holding the object, the holder being movable relative to the frame according to the direction,
- a main lever extending from a first point to a second point, said main lever being rotatably mounted to the frame via a first pivot link connecting the main lever and the frame at the first point of the main lever, the main lever being connected to the holder at a third point via a second pivot link, the third point being arranged between the first point and the second point, so that a displacement of the second point of the main lever relative to the frame according to the direction causes displacement of the holder in the direction, said displacement of the holder having a smaller amplitude than an amplitude of the displacement of the second point,
- the device comprising a secondary lever connected to the holder via a third pivot link, the secondary lever being connected to the main lever via a fourth pivot link, and being rotatably mounted to the frame via a fifth pivot link, the third pivot link being arranged between the fourth pivot link and the fifth pivot link.

In further optional aspects of the invention:
- the device comprises another main lever, the two main levers being arranged on two opposite sides of the holder, so that the other main lever extends from another first point of said other main lever to another second point of said other main lever, said other main lever being rotatably mounted to the frame via another first pivot link connecting the other main lever and the frame at the other first point, the other main lever being connected to the holder at another third point of said other main lever which is arranged between the other first point and the other second point, so that a displacement of the other second point relative to the frame according to the given direction causes displacement of the holder in said direction, said displacement of the holder having a smaller amplitude than an amplitude of the displacement of the other second point
- each main lever is arranged symmetrically on either side of the holder,
- the first pivot link and/or the second pivot link is(are) a torsion spring(s),
- the device is made of one single piece of material, the material being notably chosen between a metal and a polymer, and preferably a material having an ultimate tensile strength over 100 MPa,
- the first pivot link and/or the second pivot link is(are) a narrowing of the material relative to the main lever,
- the device comprises another secondary lever, the secondary lever being arranged on two opposite sides of the holder, so that the other secondary lever is connected to the holder via another third pivot link, the other secondary lever being connected to the main lever via another fourth pivot link, and being rotatably mounted to the frame via another fifth pivot link, the other third pivot link being arranged between the other fourth pivot link and the other fifth pivot link, the secondary levers being arranged symmetrically on either side of the holder,
- the device comprises a movable part connected to the main lever(s) at the second point, the movable part being adapted to be displaced in the given direction by an actuator.

Another aspect of the invention is an assembly comprising the device, and further comprising an actuator configured for moving each second point at least in said given direction.

In further optional aspects of the invention:
- the actuator is a motorized screw having a tip, the tip being arranged in contact with the movable part so that the actuation of the screw leads to a displacement of the second point(s) in the given direction,
- the actuator comprises a first part fixed to the frame and a second part, the second part being mobile relative to the first part, and wherein the device further comprises a magnet attached to the second part, and a magnetic field sensor adapted to detect the variation of the magnetic field caused by a movement of the second part.

Another aspect of the invention is a system comprising the device or the assembly, and a microscope objective, the objective being held by the holder of the device.

Another aspect of the invention is the use of the device, the assembly and/or the system to focus an optical objective.

Another aspect of the invention is the use of the device for moving micromirrors.

Another aspect of the invention is the use of the device for aligning optical fiber.

### BRIEF DESCRIPTION OF THE DRAWINGS

The invention will be described by way of example, with reference to the accompanying drawings in which:
- figure 1 diagrammatically shows a device according to a possible embodiment of the invention,
- figure 2 diagrammatically shows a top view of the device,
- figure 3 diagrammatically shows a side view of the device,
- figure 4 diagrammatically shows the torsion of a torsion spring of a device according to a possible embodiment of the invention,
- figure 5 diagrammatically shows a system according to a possible embodiment of the invention,
- figure 6 diagrammatically shows a side view of a system according to a possible embodiment of the invention,
- figure 7 illustrates the output of an encoder of a device according to a possible embodiment of the invention,
- figure 8 illustrates the gain of a programmable gain amplifier of an assembly according to a possible embodiment of the invention,
- figure 9 illustrates the amplitude of the magnetic field of magnets from a magnetic sensor of a device according to a possible embodiment of the invention,
- figure 10 illustrate a ratio of the amplitude over the gain for different distances of magnets from an magnetic sensor of a device according to a possible embodiment of the invention,
- figure 11 illustrates the number of turns of the magnet for different values of the ratio of the amplitude over the gain,
- figure 12 diagrammatically illustrate a hardware configuration of a system not covered by the subject-matter of the claims,
- figure 13 illustrates the measurement of components of the position of beads according to the given direction over time with a system of the prior art,
- figure 14 illustrates a zooming view of the measurement of components of the position of beads according to the given direction over time with a system of the prior art,
- figure 15 illustrates the measurement of components of the position of beads according to the given direction over time with a system of the prior art,
- figure 16 illustrates the measurement of components of the position of beads according to the given direction over time with a system of the prior art,
- figure 17 illustrates the measurement of components of the position of beads according to the given direction over time with a system according to a possible embodiment of the invention,
- figure 18 illustrates a zooming view of the measurement of components of the position of beads according to the given direction over time with a system according to a possible embodiment of the invention.

### DETAILED DESCRIPTION OF PREFERRED ASPECTS OF THE INVENTION

### Basic principles

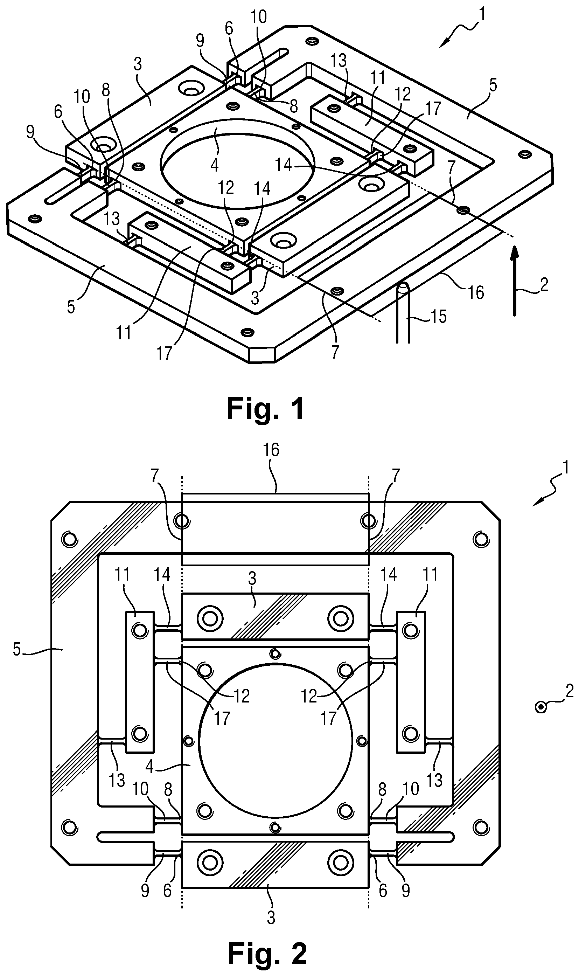

In reference with figure 1, figure 2 and figure 3, the device 1 is adapted for positioning an object according to the given direction 2. The device 1 comprises a frame 3, preferably configured for being fixed to the ground. The device 1 also comprises a holder 4. The holder 4 can hold any object destinated to be actuated with precision by the device 1. Preferably, the holder 4 is configured for holding an optical equipment. The optical equipment is preferably a microscope objective 19. The frame 3 and the holder 4 are configured such that the holder 4 is movable in the given direction 2.

The device 1 comprises a main lever 5. The main lever 5 is at least extending from a first point 6 of the main lever 5 to a second point 7 of the main lever 5. The main lever 5 is rotatably mounted to the frame 3 via the first pivot link 9. The first pivot link 9 is connecting the main lever 5 and the frame 3 at the first point 6 of the main lever 5.

The main lever 5 is mechanically connected to the holder 4 at the third point 8. Preferably, the main lever 5 is rotatably connected to the holder 4 at the third point 8. The third point 8 is arranged between the first point 6 and the second point 7. Therefore, the displacement of the second point 7 of the main lever 5 with a given amplitude relative to the frame 3 and according to the given direction 2 causes the displacement of the holder 4 with a smaller amplitude. The main lever 5 is connected to the holder 4 at the third point 8 via a second pivot link 10 of said main lever 5. Therefore, a translation of the holder 4 can occur when actuating the main lever 5.

Given a distance between the first point 6 and the third point 8 equal to L₁, and a distance between the first point 6 and the second point 7 equal to L₂, the mechanical reduction ratio of the device 1 is given by the ratio r= L₁/ L₂. The device 1 preferably comprises a movable part 16. The movable part 16 is connected to the main lever 5 at the second point 7. The movable part 16 is adapted to be displaced in the given direction 2, so as to actuate the second point 7 and the main lever 5. When the device 1 comprises several main levers 5, for example two symmetrical main levers 5, the movable part 16 can be connected to each of the main levers 5, so that when the movable part 16 is actuated, each second point 7 of each main lever 16 is actuated. The movable part 16 can be mounted fixed to the main lever(s) 5. The frame 3, the holder 4,the main lever(s) 5, and preferably the movable part 16 can form a monolithic body, as illustrated in figure 1 and in figure 2.

### Secondary lever(s) 11

The device 1 comprises at least a secondary lever 11, associated with the main lever 5. The secondary lever 11 is connected to the holder 4 via a third pivot link 12. The secondary lever 11 is also connected to the main lever 5 via a fourth pivot link 13, and is rotatably mounted to the frame 3 via a fifth pivot link 14. The third pivot link 12 is arranged between the fourth pivot link 13 and the fifth pivot link 14. Therefore, it is possible to avoid or to minimize movements of the holder 4 along a line passing by the third point 8 and by the third pivot link 12. Indeed, the force components applied on the holder 4 which are transverse to the given direction 2 cancel themselves. The secondary lever 11 makes possible to avoid transverse motion of the holder 4 and/or to avoid tipping of the holder 4 during a movement of the holder 4 relative to the given direction 2.

The fourth pivot link 13 is preferably arranged in the center of the holder 4 when projected on the line passing by the third point 8 and by the third pivot link 12, preferably at equal distance from the third point 8 and from the third pivot link 12. Therefore, the moment applied to the second pivot link 10 and to the fifth pivot link 14 can be equal.

### Symmetry

The device 1 preferably comprises two main levers 5 arranged on two opposite sides of the holder 4. Therefore, it is possible to avoid transverse motion of the main lever 5 and of the holder 4 when the device 1 is actuated. It also makes possible to avoid the tipping of the holder 4 when it is actuated.

Each main lever 5 is preferably arranged symmetrically on either side of the holder 4, relative to the holder 4, and notably, to the center of the holder 4. Therefore, it is possible to counterbalance potential transverse forces induced by one main lever 5, and then to avoid transverse motion of the holder 4.

The device 1 preferably comprise two secondary levers 11, each secondary lever 11 being associated with a main lever 5. The two secondary levers 11 are arranged on two opposite sides of the holder 4, and are symmetrical on either side of the holder 4. Therefore, it is possible to avoid any transverse motion of the holder 4 relative to the given direction 2 when the main lever 5 is actuated.

### Pivot links

At least a pivot link of the device 1 (preferably the first pivot link 9, the second pivot link 10, the third pivot link 12, the fourth pivot link 13, the fifth pivot link 14 and/or the pivot link connecting the main lever 5 to the movable part 16) can be a torsion spring. Therefore, the fabrication of the device 1 is simplified. Another effect of using torsion springs is to simplify the actuation of the device : a displacement of the holder 4 relative to the given direction 2 occurs with an actuation of the main lever 5 relative to the given direction 2, and a displacement of the holder 4 in a direction opposite to the given direction occurs when holding back an actuator due to the counter action of each torsion spring.

Preferably, the torsion springs of the first pivot link 9 and of the fifth pivot link 14 have an equal torsion coefficient. Preferably, the torsion springs of the second pivot link 10 and the third pivot link 12 have an equal torsion coefficient. Notably, all the torsion springs have an equal torsion coefficient.

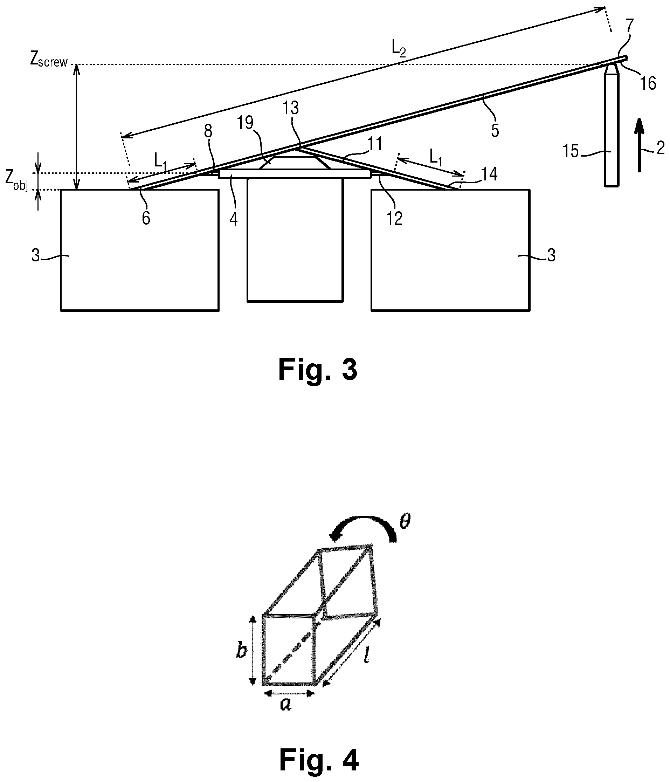

Referring to figure 4, the torsion spring is preferably a piece of material, adapted to connect two elements. The torsion spring can be a rectangular cuboid connected to another element at each of its extremities. The torsion coefficient of such a torsion spring is determined by the choice of the material of the torsion spring, its width a, its height b and its length *l*.

The device 1 is preferably monolithic, *i.e.* made of one single piece of material, comprising the frame 3, the holder 4, the main lever 5 and the torsion springs, and notably the secondary lever 11 and the movable part 16. Therefore, the different elements can be symmetrical and have the exact same mechanical property, thus avoiding any tipping and transverse motion relative to the direction 2 of the holder 4 when actuated.

The device 1, when made of one single piece of material, can be fabricated by additive printing or 3D printing. Preferably, the first pivot link 9 and/or the second pivot link 10 is(are) a narrowing of the material relative to the main lever 5. The material of the device 1 can be chosen between a metal and a polymer, and preferably a metal. Therefore, the heat conduction properties of the metal help optimizing the thermalization of the holder. The material has preferably a tensile strength over 100 MPa, notably over 280 MPa, which allows to extend the range of reversible elastic deformation of the motion along the direction 2. The material can be for example aluminium, and preferably aluminium 7075.

The device 1 can also be fabricated by conventional machining, micromachining, lift-off, and photolithographic techniques, so that to fabricate a device 1 can be miniaturized, having micrometric dimensions. For example, the thickness of the main lever 5 can be less than 10 µm. The maximum length of the device 1 can be less than 100 µm and the adjustable range of position along the direction 2 can be less than 10 µm.

### Dynamic range

For a translation of the holder 4 over the length dz relative to the given direction 2, the second point 7 (and preferably the movable part 16) has to be translated by the length z = *r.dz.* The maximum torsion occurs at the fourth pivot link 13 and is expressed by: θ = (2.z)/L₂, θ being the torsion of the torsion spring, defined by the angle difference of one extremity of the spring relative to the other, relative to the state when the device 1 is not actuated (*i.e.* θ = 0).

The infinitesimal angle of torsion (torsion per unit of length) is given by: $δθ = \frac{θ}{l} = \frac{2 z}{l . {L}_{2}}$ (1)

To maintain a reversible deformation of the torsion spring, one needs to ensure that the maximum local constraint induced by the torsion does not exceed the limit of elasticity of the material. Calling τ_{M} the maximum local constraint, which is the shear constraint on the top and bottom points of the torsion spring, one can write: ${τ}_{M} = G . δθ . \frac{b}{2} < \frac{{R}_{el}}{2}$ (2) where *G* is the transverse elastic modulus of the material, given by the formula *G = 0.4 E* in the case of metal material, *E* being the Young modulus of the material, and Rₑₗ being the limit of elastic deformation of the material. These formulas lead to a design a criterion to limit the elastic deformation to the maximum extension of the actuator: $0.4 . E . \frac{z . b}{l . {L}_{2}} < \frac{{R}_{el}}{2}$ (3)

The values of *E* and *Rₑₗ* can be adapted to optimize the focal dynamic range. Aluminium-based alloys can be chosen for fabricating the device 1 because of their high thermal conductivity. Among these alloys, aluminium 7075 is the one that offers the best compromise, with a value of *E =* 71 *GPa,* and *Rₑₗ = 470 MPa.* This alloy is the one that provides the highest level of elastic (reversible) deformation.

It is desirable that the device 1 provides a sufficient translation range in the given direction 2 of the holder 4, allowing adaptation to different microscope objectives (*e.g.* with different working distances). The translation range can be chosen for example over 200 µm, when considering the main lever 5 is only pushed. Preferably, the range can be doubled when pushing and pulling the main lever 5 at the second point and/or at the movable part 16.

Table 1 is an example of the different parameters fitting with the above-mentioned requirements.

**Table 1**

| material | Aluminium 7075 |
|---|---|
| mechanical reduction ratio *r* | 10 |
| length *L₂* of the main lever 5 | 70 mm |
| length *l* of the torsion spring | 6 mm |
| height *b* of the torsion spring | 2 mm |
| height of the main lever | 2 mm |

The range of the second point 7 (or movable part 16) displacement is then approximately given by *z_{M}* = 2*mm,* which corresponds to roughly 200 µm of focusing adjustment in one direction (400µm if we use the two directions of deformation, relative to the given direction 2 and the opposite direction).

### Actuator 15

An assembly for measuring the position of an object according to a given direction 2 comprises the device 1 and an actuator 15 configured for moving the main lever 5 at the second point 7 and/or the movable part 16, at least in said given direction 2.

### Architecture of the actuator 15

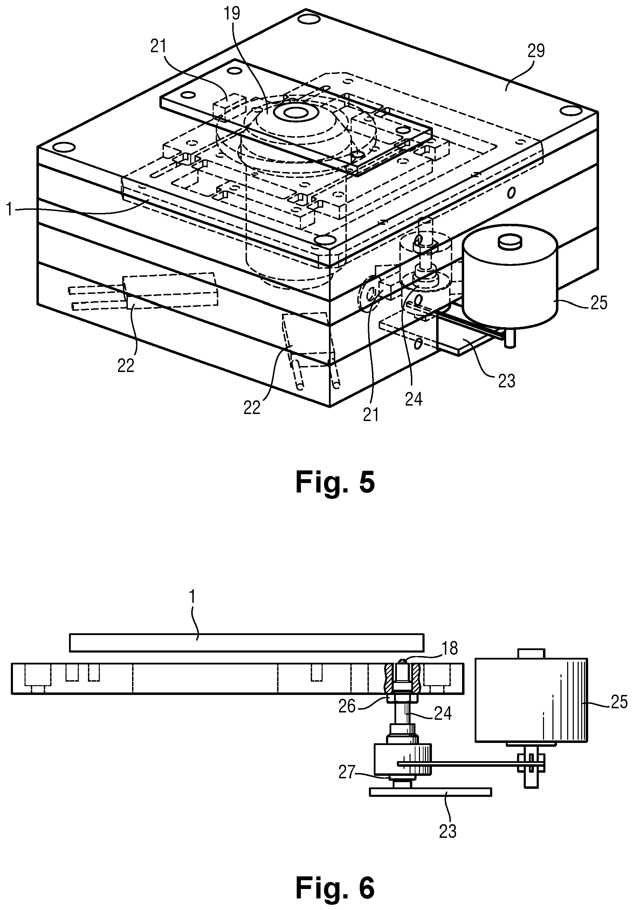

In reference to figure 5 and figure 6, the actuator 15 preferably comprises a micrometric screw 24. The screw 24 has a tip 18 which is adapted to be in contact with the main lever 5 and/or the movable part 16 of the device 1, so that a force can be applied on the device 1 according to the given direction 2, leading to a displacement of the second point(s) in the given direction 2.

The screw 24 is driven in rotation by a motor 25, for example a DC motor. The rotation angle of the screw 24, can be converted into a position. The pitch of the lead screw 24 is for example 250µm. As for any type of screw, the leadscrew can present some periodic non-linearity of the thread. This can result in an absolute accuracy of 1.5 µm relative to the given direction 2 when measuring the position of the actuator 15.

The position of the tip 18 of the actuator 15 can be measured with an external sensor 20. The external sensor 20 can be uncoupled with the rotation angle of the screw 24. The external sensor 20 is then preferably a linear magnetic and/or optical encoder, arranged at the contact point between the device 1 and the actuator 15, or at a point representative of the position of the contact point between the device 1 and the actuator 15 according to the given direction 2.

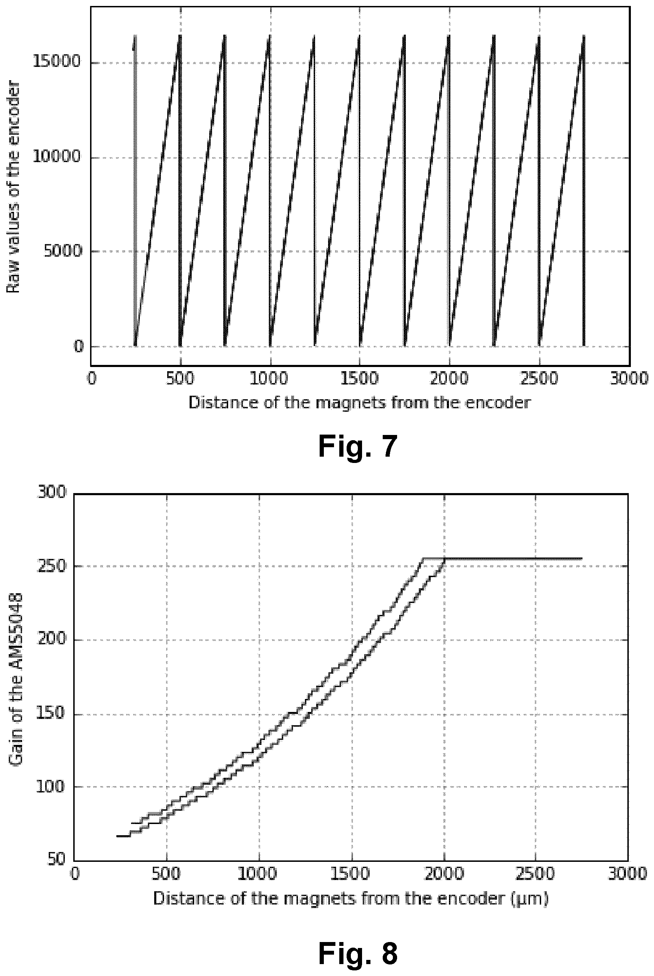

The external sensor 20 is preferably the rotary encoder 23. The rotary encoder 23 can measure a quadrature signal coming from the periodic variation of the vertical component of the magnetic field generated by the two poles of a suitable magnet(s) 27 attached to the micrometric screw 24. This vertical component is measured continuously by an array of Hall sensors embedded on the rotary encoder 23, which delivers two signals in quadrature that are processed by the DSP (digital signal processor) of the encoder 23. This output quadrature signal gives a very accurate signal proportional to the angle position of the magnet within one complete rotation (360°) of the magnets. In reference with figure 7, a 14-bit encoder 23 encodes one rotation (0-360°) of the magnet over 16384 values. As the micrometric screw is turned, the angle of the magnets as well as the distance of the magnets from the chip increases, which gives a periodic raw value for the angular range 0-360°.

However, it is not possible to distinguish the number of complete rotations from the origin (contact point of the magnets with the chip surface) with the quadrature signal. Then, the rotary encoder 23 can also measure the absolute amplitude of the magnetic field from the magnet 27. The magnetic field strength diminishes when the magnets move away from detectors of the encoder 23. This measurement is less sensitive but provides an absolute coarse signal from which can determine the number of complete rotations from the origin performed by the motor 25. An analog gain signal from a Programmable Gain Amplifier (PGA) can be continuously adapted by the rotary encoder 23, to amplify the detection of the magnetic signal and maintain an approximately constant signal level for the computation of the quadrature signal. Subsequently, the rotary encoder 23 delivers not a direct measurement of the absolute amplitude of the magnetic field, but rather, in addition to the quadrature signal, two other signals.

In reference with figure 8, one of those two signals is the analog gain (PGA), which is a 8-bit integer. As the screw 24 is turned up and down over 3 mm, the gain increases/decreases with the distance to compensate the decrease of the magnetic field, and then reaches its maximum value at roughly 2 mm from the surface of the chip. The gain is then a monotonic function of the distance over 250 µm to 2 mm from the distance.

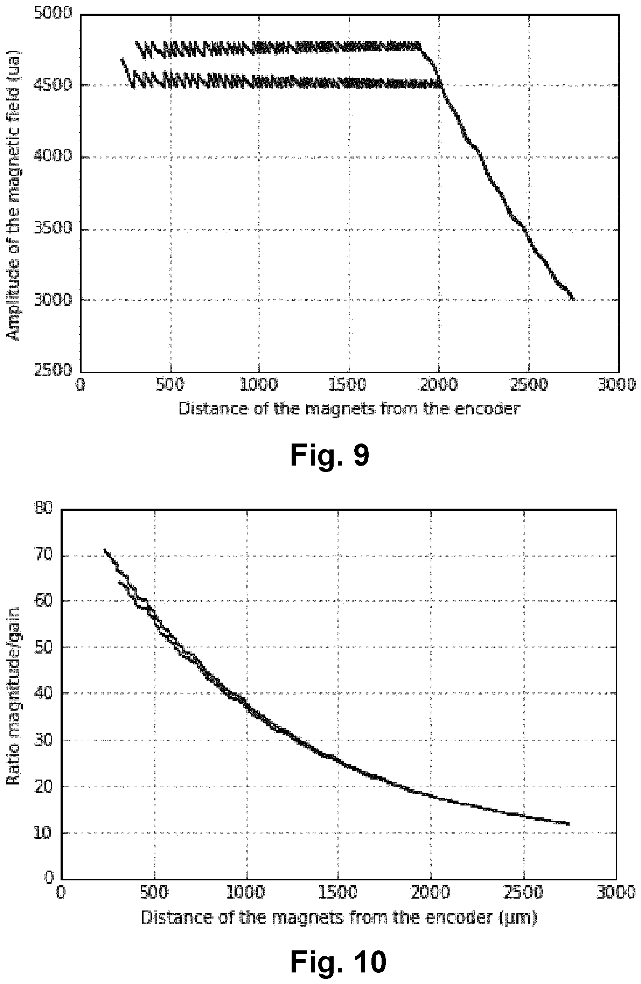

In reference with figure 9, the other of the two signals is the amplitude of the magnetic field, after amplification by the PGA. Between 0 to 2 mm, the magnitude is constant, due to the compensation of the gain. After 2 mm, the gain is saturated and does not compensate for the decrease of the magnetic field with the distance. At this point the magnitude decreases with the distance from the surface, which provides a monotonic signal over 2 mm to roughly 2.7 mm from the surface.

The combination of the amplified amplitude and of the analog gain provides the coarse amplitude, and will be used to determine in which rotation are the magnets 27.

In reference with figure 10, the ratio of the measured amplitude over the gain provides a monotonic signal for a distance between the encoder 23 and the magnets 27 comprised between 250 µm and 2,7 mm.

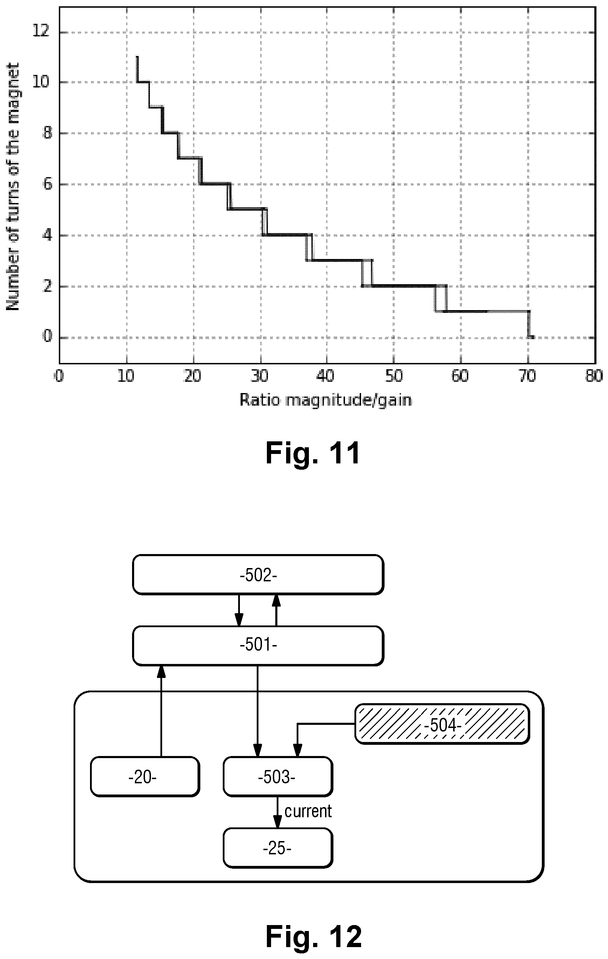

In reference with figure 11, it is possible to calculate the number of turns of the magnet from the ratio of the measured amplitude over the gain.

The rotary encoder 23 is interfaced with the microcontroller using a SPI communication protocol. A calibration step is performed. This calibration comprises a step of recording the gain and the amplitude during a complete back and forth motion of the screw 24 across 3mm. This provides a reference table of the gain and the amplitude, to find the correct number of turns.

### Thermalisation

A variation of the temperature of the system involves a dilatation of the materials of the various components, thus changing the distance between the microscope objective 19 and the object to be observed.

In reference with figure 5, the different components of the system, comprising the device 1, the actuator 15 and the microscope objective 19, can be arranged in a thermalized box 29.

The thermalized box 29 comprises at least a thermistor 21, for measuring the temperature in the thermalized box and at least a thermal controller, for example a Pelletier element 22. Those elements can be connected to a microcontroller for maintaining the temperature in the thermalized box 29.

### Hardware control

In reference with figure 12, the control of the position of the holder 4 according to the given direction 2 is preferably achieved using a microcontroller 501, a sensor 20 and a motor voltage controller 503.

The microcontroller 501 is configured for controlling a motor PID loop that compares the actual position of the actuator to the expected one and delivers a control signal (as a PWM output) to move the actuator 15. The microcontroller 501 is connected to a server 502, for example a PC.

The sensor 20, preferably the rotary encoder 23, continuously measures the position of the actuator 15 according to the given direction 2 and send it to the microcontroller 501.

A motor voltage controller 503 actuates the motion of the motor 25 with an applied control signal from the microcontroller 501. The motor voltage controller 503 is connected to a DC power supply 504.

### Control of the DC motor intensity

The motor 25 is preferably a DC motor so as to permit continuous movement. The motor 25 is preferably controlled by intensity (or current). Therefore, the power of the motor 25 is maintained constant (and so as the torque) and the energy consumption is optimized.

A Pulse Width Modulation technique (PWM) is used to produce a slow varying control signal of the motor 25. This consists of generating a continuous high-frequency square signal, with a constant peak-to-peak voltage, whose duty cycle is proportional to the value of the signal. The PWM signal can be computed directly by the microcontroller 501. However, the PWM output of the microcontroller can only deliver a voltage between 0 and 3.3 V, which is significantly below the nominal voltage of the DC motor, equal to 12 V. In addition, a negative potential cannot be generated by the microcontroller 501. Such a negative potential is required to reverse the rotation of the DC motor.

The system can preferably comprise an intermediate electronic chip. The chip provides two H bridges, and is implemented at the output of the microcontroller 501. Each bridge takes one PWM signal input, and two ON/OFF signals to control the sign of the output voltage of said chip. The output is then the copy of the PWM input signal, except that the absolute voltage level is amplified to 12V (provided by the common external electrical power of the instrument) and that the polarity of the PWM output can also be reversed.

One of the two H bridges is configured for generating the output PWM that drives the DC motor at its nominal voltage of 12V.

When controlling a DC motor with a PWM voltage signal, it is preferable to set up a PWM frequency higher than the intensity response frequency of the motor, in order to keep a constant torque during the motion of the actuator. For example, the intensity frequency is $f = \frac{r}{2 πL} = 2.64 kHz$*.* The PWM frequency of the microcontroller 501 is thus set to 50kHz to keep an approximately constant torque.

A resistor in the circuit and a simple voltage measurement of its voltage can be added to monitor continuously the average current delivered by the H bridge. Therefore, a troubleshooting signal can be measured if needed.

### Results

The mechanical stability of the holder 4 is measured using a device 1 of the invention and a piezoelectric device of the prior art for actuating the holder 4.

The measurement of the elongation of a molecule (described in the document of Ding, F., Manosas, M., Spiering, M. M., Benkovic, S. J., Bensimon, D., Allemand, J. F., & Croquette, V., 2012, "Single-molecule mechanical identification and sequencing", Nature methods, 9(4), 367) is made among different sources of noise.

Considering the measurement of one microbead i at a time *t* through a microscope objective 19, the raw signal writes: ${z}_{i} \left(t\right) = {z}_{i , bead} \left(t\right) + {z}_{inst} \left(t\right)$ (5) where *z_{i,bead}*(*t*) is the signal from the bead and *zᵢₙₛₜ*(*t*) is the contribution to the signal from the instrument noise (which comprises mechanical noise and thermal drift from various sources).

In the case where the bead i is a real hairpin, the raw signal writes: ${z}_{i} \left(t\right) = {z}_{i , mol} \left(t\right) + {z}_{i , SDI} \left(t\right) + {z}_{inst} \left(t\right)$ (6) where *z_{i,mol}*(*t*) is the molecule signal (which contains the elongation, the Brownian fluctuation, and all molecule specific noise) and *z_{i,SDI}*(*t*) is the optical noise.

For a reference fixed bead *j,* the signal *zⱼ*(*t*) writes: ${z}_{j} \left(t\right) = 0 + {z}_{j , SDI} \left(t\right) + {z}_{inst} \left(t\right)$ (7)

Then, the raw signal of one reference bead provides the value of instrument noise with the optical precision. It is then possible to cancel out the optical noise by taking the average of several reference beads. The measurement of one hairpin from the instrument noise can be corrected by computing: ${z}_{i , corr} \left(t\right) = {z}_{i} \left(t\right) - {\left〈{z}_{j}\left(t\right)\right〉}_{j}$ (8) where 〈*zⱼ*(*t*)〉*ⱼ* is the average of all the reference beads signals. However, although this process improves greatly the quality of the signal in the presence of significant instrument noise, if one assumes an optical precision of 1nm (*i.e. σ_{SDI}* = 1*nm*)*,* one would need to average the measurement of 100 reference beads to measure the value *zᵢₙₛₜ*(*t*) with a precision of 0.1nm, and then to correct the measure properly.

Reducing instrumentation noise as much as possible is then of crucial importance to improve the quality of the measurement.

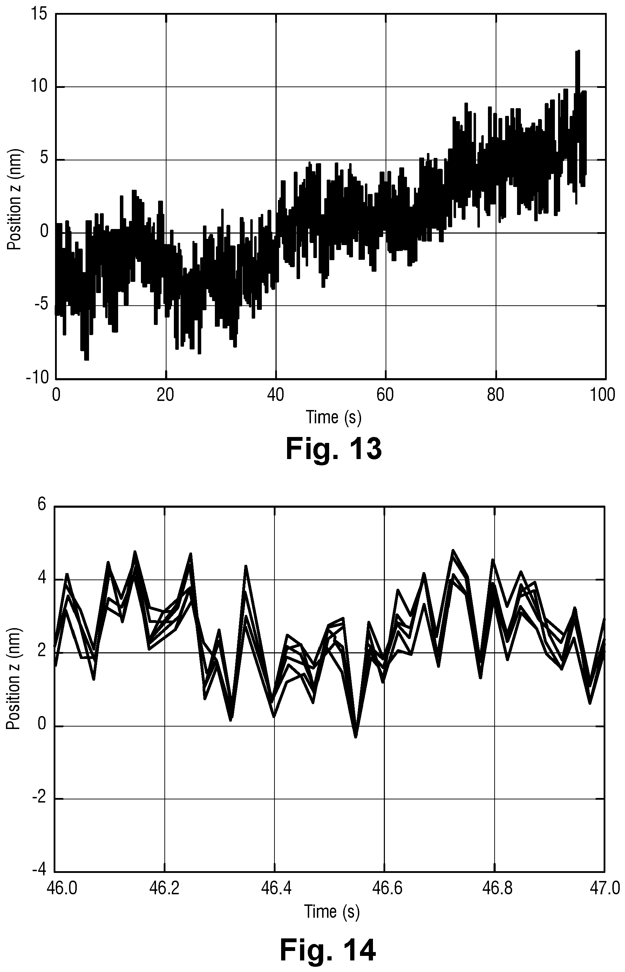

In reference with figure 13, figure 14, figure 15 and figure 16, a system comprising a piezoelectric device of the prior art is used to measure the noise characteristics of beads.

Eighteen reference beads are fixed to a flow cell surface in a single field of view, over the course of several minutes, without changing the objective position. A piezoelectric device of the prior art is used to maintain the position of the holder 4. Figure 13 illustrates the superimposed records of the fluctuation of the position z (position in the given direction 2) of the fixed beads. Figure 14 illustrates a portion of the data illustrated in figure 13 on a shorter time scale.

Two distinct noise signatures can be detected. A slow variation of position from -5nm to almost 10nm (apparent in figure 13) occurs because of the thermal drift during the experiment. However, the fluctuations illustrated in figure 14 emphasize a high-frequency fluctuation that is common to all the 18 beads. This high-frequency mechanical noise is caused by the fast servo loop of the piezo electric device (or piezo electric focusing element, PIFOC, from PhysikInstrument).

One can isolate the fluctuation in the optical measurement of a selected bead from the other common sources of fluctuation by subtracting the average of all the other immobile beads, that is: ${z}_{i , SDI} \left(t\right) = {z}_{i} \left(t\right) - {\left〈{z}_{j}\left(t\right)\right〉}_{j \neq i}$

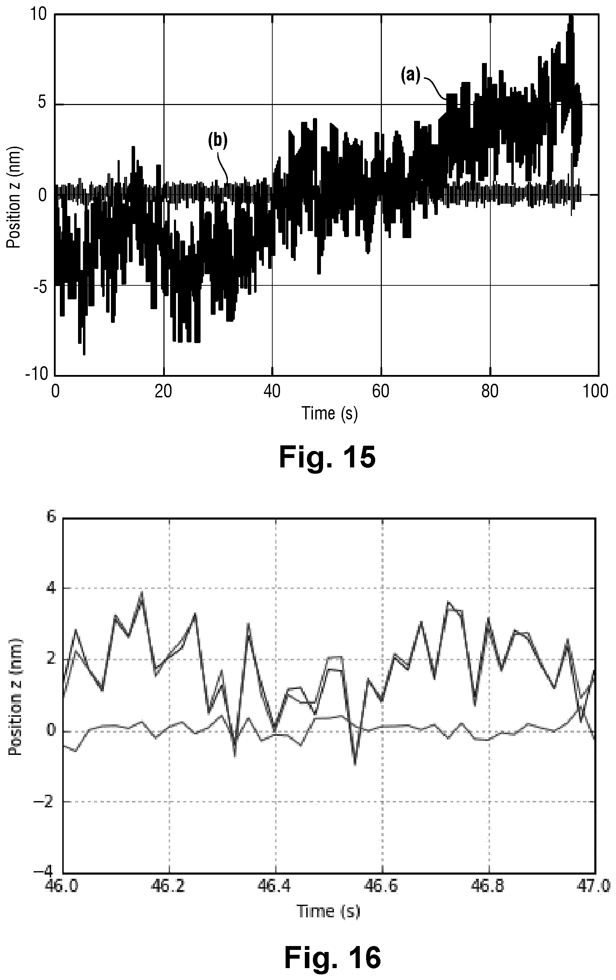

Figure 15 illustrates the various signals for one particular bead: the raw signal (a), the average of all beads (not visible), and the signal-minus-average (b). For this bead, one measures:
- a standard deviation of the raw signal of 3.3 nm, which encompasses all sources of noise (thermal drift, mechanical noise, optical measurement noise)
- a high-frequency standard deviation of the raw signal of 1.1 nm (filtered from low thermal drift), which comprise the contribution of the high frequency mechanical noise and of the optical noise,
- a standard deviation of the corrected signal (b) of 0.3nm, which corresponds to the optical noise.

The measurement is repeated for all the different beads in the field of view.

The system comprising a 100X objective is characterized by an optical precision of 0.3 nm, and by a high-frequency mechanical noise of 1 nm.

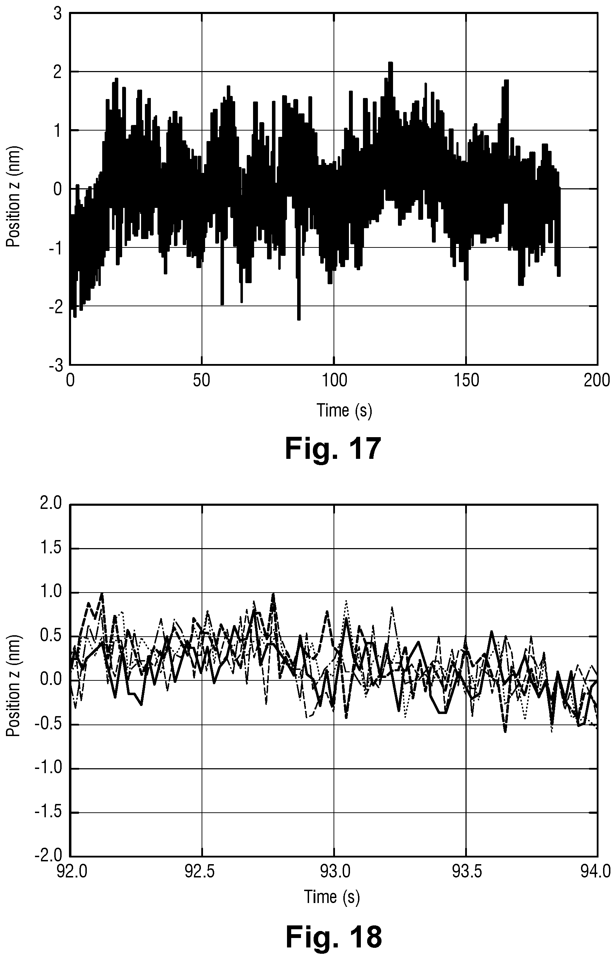

In reference with figure 17 and figure 18, the same experiment (recording the position of fixed beads, with the same camera, settings, and the same average intensity of the LEDs) has been repeated except that the piezoelectric device is replaced with the device 1, while keeping the objective and the optical mask unchanged. The system also comprises the thermalization described above.

Figure 17 illustrates the record of the position in the z-direction (given direction 2) of immobile beads. By virtue of the active thermalization of the system, very little (low frequency) thermal drift is seen during the course of the experiment.

For this bead, one measures:
- a standard deviation for the raw signal of 0.5nm, which comprises all the instrument noise, including the low frequency noise (residual thermal noise),
- a high-frequency standard deviation for the raw signal of 0.3nm, and
- a standard deviation of 0.3nm for the correct signal.

The fact that no difference in noise can be seen between the raw high frequency fluctuation and the standard deviation of the corrected signal indicates that the mechanical noise from the focusing system has been sufficiently reduced to be negligible compared to other source of noises (residual of thermal noise and optical noise). The same process achieved for all beads gives the same result.

## Claims

1. A device (1) for positioning an object according to a direction (2), comprising:
- a frame (3),
- a holder (4) for holding the object, the holder (4) being movable relative to the frame (3) according to the direction (2),
- -a main lever (5) extending from a first point (6) to a second point (7), said main lever (5) being rotatably mounted to the frame (3) via a first pivot link (9) connecting the main lever (5) and the frame (3) at the first point (6) of the main lever (5), the main lever (5) being connected to the holder (4) at a third point (8), the third point (8) being arranged between the first point (6) and the second point (7), so that a displacement of the second point (7) of the main lever (5) relative to the frame (3) according to the direction (2) causes displacement of the holder (4) in the direction (2), said displacement of the holder (4) having a smaller amplitude than an amplitude of the displacement of the second point (7),
**characterised in that** the main lever (5) is connected to the holder (4) at the third point (8) via a second pivot link (10) and **in that** the device (1) comprises a secondary lever (11) connected to the holder via a third pivot link (12), the secondary lever (11) being connected to the main lever (5) via a fourth pivot link (13), and being rotatably mounted to the frame via a fifth pivot link (14), the third pivot link (12) being arranged between the fourth pivot link (13) and the fifth pivot link (14).

2. The device according to claim 1, wherein the first pivot link (9) and/or the second pivot link (10) are torsion springs / is a torsion spring.

3. The device according to claim 1 or 2, made of one single piece of material, the material being notably chosen between a metal and a polymer, and preferably a material having an ultimate tensile strength over 100 MPa.

4. The device according to claim 3, wherein the first pivot link (9) and/or the second pivot link (10) is a narrowing of the material relative to the main lever (5).

5. The device according to any of claims 1 to 4, further comprising a movable part (16) connected to the main lever (5) at the second point (7), the movable part (16) being adapted to be displaced in the direction (2) by an actuator (15).

6. The device according to any of claim 1 to 5, wherein the main lever is a first main lever, the device further comprising a second main lever (5), the first main lever and the second main lever being arranged on two opposite sides of the holder (4).

7. The device according to claim 6, wherein each of the first main lever and the second main lever is arranged symmetrically on either side of the holder (4).

8. The device according to any of claims 6 or 7, wherein the secondary lever is a first secondary lever (11), the device (1) further comprising a second secondary lever (11), the first secondary lever and the second secondary lever being arranged on two opposite sides of the holder (4), each of the first secondary lever and the second secondary lever (11) being arranged symmetrically on either side of the holder (4).

9. An assembly comprising the device according to any of claims 1 to 8, and further comprising an actuator (15) configured for moving each second point (7) at least in the direction (2).

10. The assembly according to claim 9 when dependent on claim 5, wherein the actuator (15) is a motorized screw having a tip (18), the tip (18) being arranged in contact with the movable part (16) so that an actuation of the screw leads to a displacement of the second point(s) (7) in the direction (2).

11. The assembly according to claims 9 or 10, wherein the actuator (15) comprises a first part fixed to the frame (3) and a second part, the second part being mobile relative to the first part, and wherein the device further comprises a magnet attached to the second part, and a magnetic field sensor adapted to detect a variation of a magnetic field caused by a movement of the second part.

12. A system comprising the device (1) according to any of claims 1 to 8 or the assembly according to claims 11 or 12, further comprising a microscope objective, the microscope objective being held by the holder (4).

13. A use of the device according to any of claims 1 to 8 or the assembly according to any of claims 9 to 11 or the system according to claim 12, to focus an optical objective.

## Patentansprüche

1. Vorrichtung (1) zum Positionieren eines Objekts entlang einer Richtung (2), umfassend:
- einen Rahmen (3),
- eine Halterung (4) zum Halten des Objekts, wobei die Halterung (4) relativ zum Rahmen (3) entlang der Richtung (2) bewegbar ist,
- einen Haupthebel (5), der sich von einem ersten Punkt (6) zu einem zweiten Punkt (7) erstreckt, wobei der Haupthebel (5) über ein erstes Schwenkgelenk (9), das den Haupthebel (5) und den Rahmen (3) am ersten Punkt (6) des Haupthebels (5) verbindet, drehbar am Rahmen (3) gelagert ist,
wobei der Haupthebel (5) an einem dritten Punkt (8) mit der Halterung (4) verbunden ist, wobei der dritte Punkt (8) zwischen dem ersten Punkt (6) und dem zweiten Punkt (7) angeordnet ist, sodass eine Verschiebung des zweiten Punktes (7) des Haupthebels (5) relativ zum Rahmen (3) in der Richtung (2) eine Verschiebung der Halterung (4) in der Richtung (2) bewirkt, wobei die Verschiebung der Halterung (4) eine geringere Amplitude aufweist als die Amplitude der Verschiebung des zweiten Punktes (7), **dadurch gekennzeichnet, dass** der Haupthebel (5) am dritten Punkt (8) über ein zweites Schwenkgelenk (10) mit der Halterung (4) verbunden ist und dass die Vorrichtung (1) einen Nebenhebel (11) umfasst, der über ein drittes Schwenkgelenk (12) mit der Halterung verbunden ist, wobei der Nebenhebel (11) über ein viertes Schwenkgelenk (13) mit dem Haupthebel (5) verbunden ist und über ein fünftes Schwenkgelenk (14) drehbar am Rahmen gelagert ist, wobei das dritte Schwenkgelenk (12) zwischen dem vierten Schwenkgelenk (13) und dem fünften Schwenkgelenk (14) angeordnet ist.

2. Vorrichtung nach Anspruch 1, wobei das erste Schwenkgelenk (9) und/oder das zweite Schwenkgelenk (10) Torsionsfedern sind.

3. Vorrichtung nach Anspruch 1 oder 2, die aus einem einzigen Materialstück gefertigt ist, wobei das Material insbesondere aus der Gruppe Metall und Polymer ausgewählt ist und vorzugsweise ein Material mit einer Zugfestigkeit von über 100 MPa ist.

4. Vorrichtung nach Anspruch 3, wobei das erste Schwenkglied (9) und/oder das zweite Schwenkglied (10) eine Verjüngung des Materials im Verhältnis zum Haupthebel (5) darstellt.

5. Vorrichtung nach einem der Ansprüche 1 bis 4, die ferner ein bewegliches Teil (16) umfasst, das am zweiten Punkt (7) mit dem Haupthebel (5) verbunden ist, wobei das bewegliche Teil (16) so ausgelegt ist, dass es durch einen Aktuator (15) in Richtung (2) verschoben werden kann.

6. Vorrichtung nach einem der Ansprüche 1 bis 5, wobei der Haupthebel ein erster Haupthebel ist, wobei die Vorrichtung ferner einen zweiten Haupthebel (5) umfasst, wobei der erste Haupthebel und der zweite Haupthebel an zwei gegenüberliegenden Seiten des Halters (4) angeordnet sind.

7. Vorrichtung nach Anspruch 6, wobei sowohl der erste Haupthebel als auch der zweite Haupthebel symmetrisch auf beiden Seiten des Halters (4) angeordnet sind.

8. Vorrichtung nach einem der Ansprüche 6 oder 7, wobei der Sekundärhebel ein erster Sekundärhebel (11) ist, wobei die Vorrichtung (1) ferner einen zweiten Sekundärhebel (11) umfasst, wobei der erste Sekundärhebel und der zweite Sekundärhebel an zwei gegenüberliegenden Seiten des Halters (4) angeordnet sind, wobei sowohl der erste Sekundärhebel als auch der zweite Sekundärhebel (11) symmetrisch auf beiden Seiten des Halters (4) angeordnet sind.

9. Eine Baugruppe, die die Vorrichtung gemäß einem der Ansprüche 1 bis 8 umfasst und ferner einen Aktuator (15) umfasst, der so ausgelegt ist, dass er jeden zweiten Punkt (7) zumindest in Richtung (2) bewegt.

10. Die Baugruppe nach Anspruch 9, sofern sie auf Anspruch 5 basiert, wobei der Aktuator (15) eine motorisierte Schraube mit einer Spitze (18) ist, wobei die Spitze (18) in Kontakt mit dem beweglichen Teil (16) angeordnet ist, so dass eine Betätigung der Schraube zu einer Verschiebung des/der zweiten Punktes/Punkte (7) in Richtung (2) führt.

11. Anordnung nach Anspruch 9 oder 10, wobei der Aktuator (15) ein am Rahmen (3) befestigtes erstes Teil und ein zweites Teil umfasst, wobei das zweite Teil relativ zum ersten Teil beweglich ist, und wobei die Vorrichtung ferner einen am zweiten Teil angebrachten Magneten und einen Magnetfeldsensor umfasst, der dazu ausgelegt ist, eine durch eine Bewegung des zweiten Teils verursachte Änderung eines Magnetfelds zu erfassen.

12. System, das die Vorrichtung (1) gemäß einem der Ansprüche 1 bis 8 oder die Anordnung gemäß den Ansprüchen 11 oder 12 umfasst und ferner ein Mikroskopobjektiv umfasst, wobei das Mikroskopobjektiv von dem Halter (4) gehalten wird.

13. Verwendung der Vorrichtung gemäß einem der Ansprüche 1 bis 8 oder der Anordnung gemäß einem der Ansprüche 9 bis 11 oder des Systems gemäß Anspruch 12 zum Fokussieren eines optischen Objektivs.

## Revendications

1. Dispositif (1) destiné à positionner un objet selon une direction (2), comprenant :
- un châssis (3),
- un support (4) destiné à maintenir l'objet, le support (4) étant mobile par rapport au châssis (3) selon la direction (2),
- un levier principal (5) s'étendant d'un premier point (6) à un deuxième point (7), ledit levier principal (5) étant monté de manière pivotante sur le châssis (3) par l'intermédiaire d'une première articulation pivotante (9) reliant le levier principal (5) et le châssis (3) au premier point (6) du levier principal (5),
le levier principal (5) étant relié au support (4) en un troisième point (8), le troisième point (8) étant agencé entre le premier point (6) et le deuxième point (7), de sorte qu'un déplacement du deuxième point (7) du levier principal (5) par rapport au châssis (3) selon la direction (2) provoque un déplacement du support (4) dans la direction (2), ledit déplacement du support (4) ayant une amplitude inférieure à l'amplitude du déplacement du deuxième point (7), **caractérisé en ce que** le levier principal (5) est relié au support (4) au niveau du troisième point (8) par l'intermédiaire d'une deuxième articulation pivotante (10) et **en ce que** le dispositif (1) comprend un levier secondaire (11) relié au support par l'intermédiaire d'une troisième articulation pivotante (12), le levier secondaire (11) étant relié au levier principal (5) par l'intermédiaire d'une quatrième articulation pivotante (13), et étant monté de manière rotative sur le châssis par l'intermédiaire d'une cinquième articulation pivotante (14), la troisième articulation pivotante (12) étant disposée entre la quatrième articulation pivotante (13) et la cinquième articulation pivotante (14).

2. Dispositif selon la revendication 1, dans lequel la première articulation pivotante (9) et/ou la deuxième articulation pivotante (10) sont des ressorts de torsion / est un ressort de torsion.

3. Dispositif selon la revendication 1 ou 2, constitué d'une seule pièce de matériau, le matériau étant notamment choisi parmi un métal et un polymère, et de préférence un matériau présentant une résistance maximale à la traction supérieure à 100 MPa.

4. Dispositif selon la revendication 3, dans lequel la première articulation pivotante (9) et/ou la deuxième articulation pivotante (10) constitue un rétrécissement du matériau par rapport au levier principal (5).

5. Dispositif selon l'une quelconque des revendications 1 à 4, comprenant en outre une pièce mobile (16) reliée au levier principal (5) au niveau du deuxième point (7), la pièce mobile (16) étant adaptée pour être déplacée dans la direction (2) par un actionneur (15).

6. Dispositif selon l'une quelconque des revendications 1 à 5, dans lequel le levier principal est un premier levier principal, le dispositif comprenant en outre un deuxième levier principal (5), le premier levier principal et le deuxième levier principal étant disposés sur deux côtés opposés du support (4).

7. Dispositif selon la revendication 6, dans lequel le premier levier principal et le deuxième levier principal sont chacun disposés symétriquement de part et d'autre du support (4).

8. Dispositif selon l'une quelconque des revendications 6 ou 7, dans lequel le levier secondaire est un premier levier (11), le dispositif (1) comprenant en outre un deuxième levier secondaire (11), le premier levier secondaire et le deuxième levier secondaire étant disposés sur deux côtés opposés du support (4), le premier levier secondaire et le deuxième levier secondaire (11) étant chacun disposés symétriquement de part et d'autre du support (4).

9. Ensemble comprenant le dispositif selon l'une quelconque des revendications 1 à 8, et comprenant en outre un actionneur (15) configuré pour déplacer chaque deuxième point (7) au moins dans la direction (2).

10. Ensemble selon la revendication 9, lorsqu'elle dépend de la revendication 5, dans lequel l'actionneur (15) est une vis motorisée comportant une pointe (18), la pointe (18) étant disposée en contact avec la partie mobile (16) de sorte qu'un actionnement de la vis entraîne un déplacement du ou des seconds points (7) dans la direction (2).

11. Ensemble selon l'une quelconque des revendications 9 et 10, dans lequel l'actionneur (15) comprend une première partie fixée au châssis (3) et une deuxième partie, la deuxième partie étant mobile par rapport à la première partie, et dans lequel le dispositif comprend en outre un aimant fixé à la deuxième partie, et un capteur de champ magnétique adapté pour détecter une variation d'un champ magnétique provoquée par un mouvement de la deuxième partie.

12. Système comprenant le dispositif (1) selon l'une quelconque des revendications 1 à 8 ou ensemble selon l'une quelconque des revendications 11 ou 12, comprenant en outre un objectif de microscope, l'objectif de microscope étant maintenu par le support (4).

13. Utilisation du dispositif selon l'une quelconque des revendications 1 à 8, ou de l'ensemble selon l'une quelconque des revendications 9 à 11, ou du système selon la revendication 12, pour focaliser un objectif optique.
